# EUROPEAN PATENT APPLICATION

(11) **EP 3 872 381 A1**
(43) Date of publication of application: **01.09.2021**
(21) Application number: 19876333.6
(22) Date of filing: 17.10.2019
(51) Int. Cl.: F16L 11/06, F16L 11/12

(54) **TUBE AND TREATMENT DEVICE**

(30) Priority: 25.10.2018 JP 2018200813
(71) Applicant: SCREEN Holdings Co., Ltd., Kyoto 602-8585 (JP)
(72) Inventor: KOBAYASHI, Eiji, Kyoto-shi, Kyoto 602-8585 (JP); TORAI, Shinji, Kyoto-shi, Kyoto 602-8585 (JP); YOSHIMOTO, Syuhei, Kyoto-shi, Kyoto 602-8585 (JP)
(74) Representative: Kilian Kilian & Partner
(86) International application number: PCT/JP2019/040797
(87) International publication number: WO 2020/085176

(57) **Abstract**

A tube (1) is flexible, and includes a tubular outer peripheral surface (10) and a tubular inner peripheral surface (20). The outer peripheral surface (10) includes corner portions (11) protruding outwardly. The inner peripheral surface (20) includes first arcuate portions (21) positioned inside the corner portions (11) and having a radius of curvature greater than that of the comer portions (11). In the tube (1) having such a shape, opposed portions of the inner peripheral surface (20) are less prone to be close to each other when an external force is applied to the tube (1) or when the tube (1) is locally bent. This restrains an internal flow passage (2) of the tube (1) from being blocked.

## Description

### Technical Field

The present invention relates to a flexible tube and a processing apparatus including the tube.

### Background Art

Conventionally, a large number of tubes are used for the flow of various chemical liquids, deionized water, or gases such as nitrogen gas in manufacturing apparatuses for precision electronic components such as semiconductor wafers, flat panel displays (e.g., liquid crystal displays and organic EL displays), and chemical batteries (e.g., lithium-ion batteries and fuel cells). In addition, a large number of tubes are used for the flow of ink in inkjet printers for commercial printing. Further, a large number of tubes are used for the flow of raw materials in manufacturing apparatuses for medical and pharmaceutical products and in manufacturing apparatuses for food products. Furthermore, tubes for the flow of liquids or gases are sometimes used in other fields such as the fields of medical devices and architecture.

It is preferable that tubes pliantly flex and deform for convenience of routing or arrangement. For this reason, a large number of tubes are made of rubber or flexible resins. Conventional tubes are disclosed in Patent Literatures 1 and 2, for example.

### Citation List

### Patent Literature

Patent Literature 1: Japanese Patent Application Laid-Open No. 2018-003895
Patent Literature 2: International Publication No. 2014/157164

### Summary of Invention

### Technical Problem

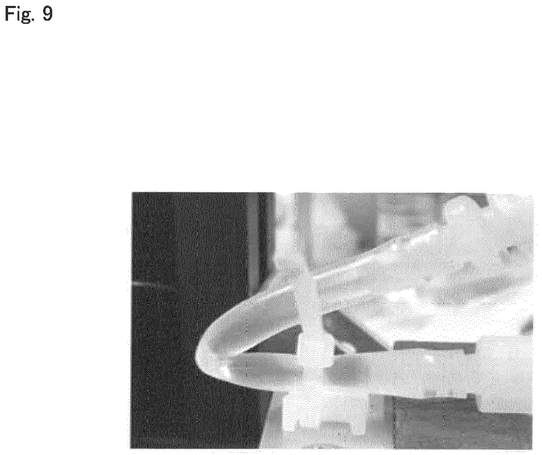

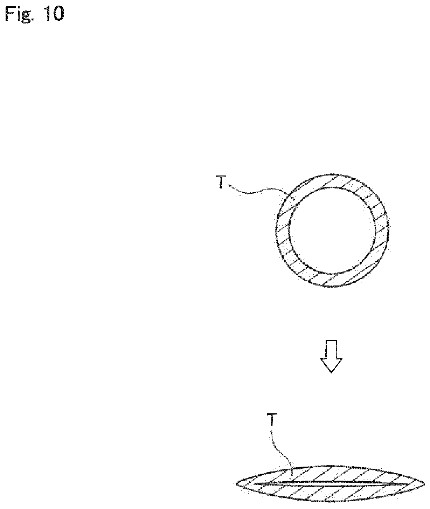

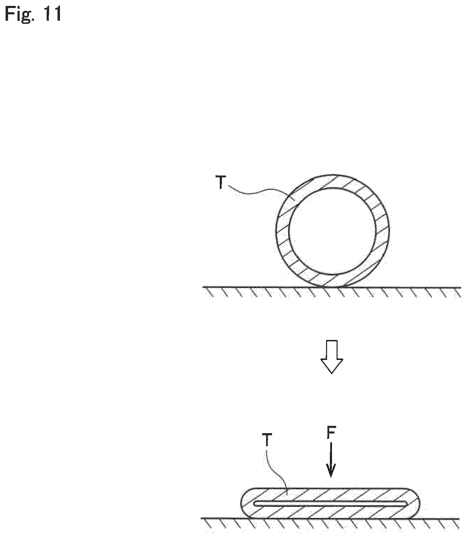

Unfortunately, if a tube is cylindrical in shape as disclosed in Patent Literatures 1 and 2, the tube is crushed to block the internal flow passage thereof in some cases when an external pressure is applied to the tube or when the tube is bent locally at a steep angle. Fig. 9 is a photograph showing a bent location of a conventional cylindrical tube when the tube is bent. Fig. 10 is a view showing cross sections of a bent location of a conventional cylindrical tube T when the tube T is bent. Fig. 11 is a view showing cross sections of the conventional cylindrical tube T when the tube T is placed on a flat surface and pressure F is applied thereto from above. As shown in Figs. 9 to 11, opposed portions of the inner peripheral surface of the conventional cylindrical tube T are prone to come close to each other when the tube T is deformed. The internal flow passage of the tube T is thus prone to be blocked.

In view of the foregoing, it is therefore an object of the present invention to provide a tube capable of restraining the internal flow passage of the tube from being blocked even when an external pressure is applied to the tube or when the tube is locally bent, and a processing apparatus including the tube.

### Solution to Problem

To solve the aforementioned problem, a first aspect of the present invention is intended for a flexible tube comprising: a tubular outer peripheral surface; and a tubular inner peripheral surface, the outer peripheral surface including at least one corner portion protruding outwardly, the inner peripheral surface including a first arcuate portion positioned inside the corner portion and having a radius of curvature greater than that of the corner portion.

A second aspect of the present invention is intended for the tube of the first aspect, which further comprises a plurality of thick-walled portions arranged in a circumferential direction, each of the thick-walled portions including the corner portion and the first arcuate portion.

A third aspect of the present invention is intended for the tube of the second aspect, which further comprises a thin-walled portion having a thickness less than that of the thick-walled portions and provided between adjacent ones of the thick-walled portions.

A fourth aspect of the present invention is intended for the tube of the third aspect, wherein the thick-walled portions are odd in number.

A fifth aspect of the present invention is intended for the tube of the fourth aspect, wherein the at least one corner portion includes three corner portions, wherein the outer peripheral surface includes the three corner portions and planar side portions each positioned between adjacent ones of the corner portions, and wherein the inner peripheral surface is in a cylindrical shape including the first arcuate portion.

A sixth aspect of the present invention is intended for the tube of any one of the first to fifth aspects, wherein the inner peripheral surface forms a flow passage.

A seventh aspect of the present invention is intended for the tube of any one of the first to fifth aspects, the tube being mounted on an outer peripheral surface of another tube.

An eighth aspect of the present invention is intended for a processing apparatus comprising: a processing part for performing a process using a fluid on an object, and a tube as recited in any one of the first to seventh aspects, wherein the tube is used to perform at least one of the supply of the fluid to the processing part and the drainage of the fluid from the processing part.

### Advantageous Effects of Invention

According to the first to eighth aspects of the present invention, opposed portions of the inner peripheral surface of the tube are less prone to be close to each other when an external force is applied to the tube or when the tube is locally bent. This restrains the flow passage in the tube from being blocked.

In particular, according to the second aspect the present invention, the flow passage in the tube is restrained from being blocked regardless of the direction of the external pressure and the direction of bending.

In particular, according to the third aspect the present invention, the deformation of the tube is concentrated on the thin-walled portion. This further restrains the flow passage in the tube from being blocked.

In particular, according to the fourth aspect the present invention, each of the thick-walled portions and the thin-walled portion face each other across the internal flow passage. This further restrains the flow passage in the tube from being blocked.

### Brief Description of Drawings

[fig. 1] Fig. 1 is a perspective view of a tube.
[fig. 2] Fig. 2 is a sectional view of the tube.
[fig. 3] Fig. 3 is a photograph showing a bent location when a tube is bent.
[fig. 4] Fig. 4 is a sectional view showing cross sections of a bent location when the tube is bent.
[fig. 5] Fig. 5 is a view showing the deformation of the tube when pressure is applied to the tube.
[fig. 6] Fig. 6 is a conceptual view of a processing apparatus including tubes.
[fig. 7] Fig. 7 is a sectional view of a tube according to a first modification.
[fig. 8] Fig. 8 is a sectional view of a tube according to a second modification.
[fig. 9] Fig. 9 is a photograph showing a bent location when a conventional tube is bent.
[fig. 10] Fig. 10 is a view showing cross sections of a bent location when a conventional tube is bent.
[fig. 11] Fig. 11 is a view showing cross sections of a conventional tube when pressure is applied to the tube.

### Description of Embodiments

An embodiment according to the present invention will now be described with reference to the drawings.

### <1. About Tube>

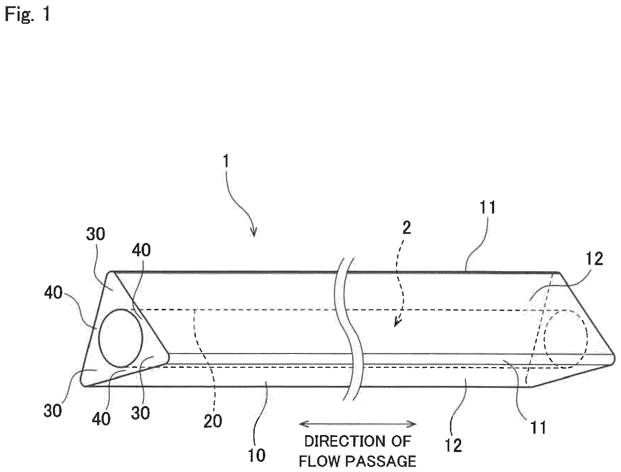

Fig. 1 is a perspective view of a tube 1 according to one embodiment of the present invention. This tube 1 is a tube having a flow passage 2 for passing fluid (liquid or gas) therein. The tube 1 is flexible. This allows the tube 1 to be disposed in a location while being pliantly curved in accordance with the shape of the location where the tube 1 is to be placed. Rubber or flexible resins are used as the material of the tube 1. Specific examples of the material of the tube 1 used herein include silicone rubber, natural rubber, urethane gel, flexible polyvinyl chloride, elastomer resin, PVC (polyvinyl chloride), TPO (olefinic thermoplastic elastomer), polyethylene, and fluororesin. The material of the tube 1 may be selected, as appropriate, depending on application purposes.

The tube 1 may be made of a plurality of materials. As an example, the tube 1 may have a multi-layer structure including an inner-layer tube made of a material and an outer-layer tube made of another material.

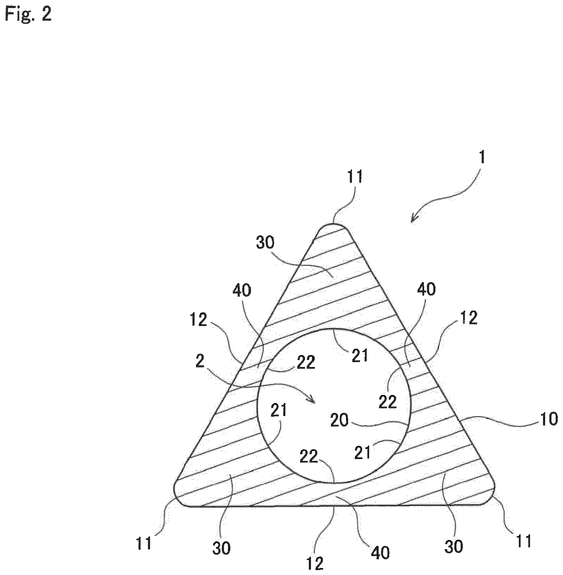

Fig. 2 is a sectional view of the tube 1 taken along a plane perpendicular to the direction of the flow passage thereof. As shown in Figs. 1 and 2, the tube 1 has an outer peripheral surface 10 substantially in the shape of a triangular prism and an inner peripheral surface 20 in a cylindrical shape.

As shown in Fig. 2, the outer peripheral surface 10 in a cross section of the tube 1 in the present embodiment is substantially in the shape of an equilateral triangle. More specifically, the outer peripheral surface 10 of the tube 1 has three corner portions 11 and three side portions 12. The three corner portions 11 protrude outwardly of the tube 1 and extend continuously in the direction of the flow passage. The three corner portions 11 are arranged in circumferentially equally spaced relation around the flow passage 2. Each of the three side portions 12 is positioned between adjacent ones of the corner portions 11. As shown in Figs. 1 and 2, each of the side portions 12 spreads in a planar shape and extends continuously in the direction of the flow passage.

The inner peripheral surface 20 of the tube 1 in the present embodiment is in a cylindrical shape. That is, the inner peripheral surface 20 in a cross section of the tube 1 is circular in shape, as shown in Fig. 2. The radius of curvature of the inner peripheral surface 20 is greater than that of the aforementioned corner portions 11. Arcuate portions of the inner peripheral surface 20 of the tube 1 which are positioned inside the respective corner portions 11 are referred to hereinafter as "first arcuate portions 21". Arcuate portions of the inner peripheral surface 20 of the tube 1 which are positioned inside the respective side portions 12 are referred to hereinafter as "second arcuate portions 22".

The tube 1 has three thick-walled portions 30 and three thin-walled portions 40 thinner than the thick-walled portions 30. Each of the thick-walled portions 30 has one of the corner portions 11 and one of the first arcuate portions 21. Each of the thin-walled portions 40 has one of the side portions 12 and one of the second arcuate portions 22. The three thick-walled portions 30 are arranged in circumferentially equally spaced relation around the flow passage 2. Each of the thin-walled portions 40 is positioned between adjacent ones of the thick-walled portions 30. That is, the thick-walled portions 30 and the thin-walled portions 40 are circumferentially alternately arranged around the flow passage 2.

The inner peripheral surface 20 of the tube 1 shall have a diameter of not less than 2 mm, for example. The tube 1 shall have a length of 100 mm to 100 m, for example. It should be noted that the inner diameter and length of the tube in the present invention are not limited to these numerical ranges.

### <2. Appearance of Bend>

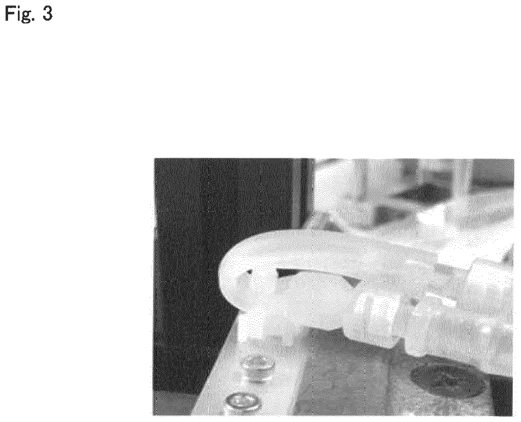

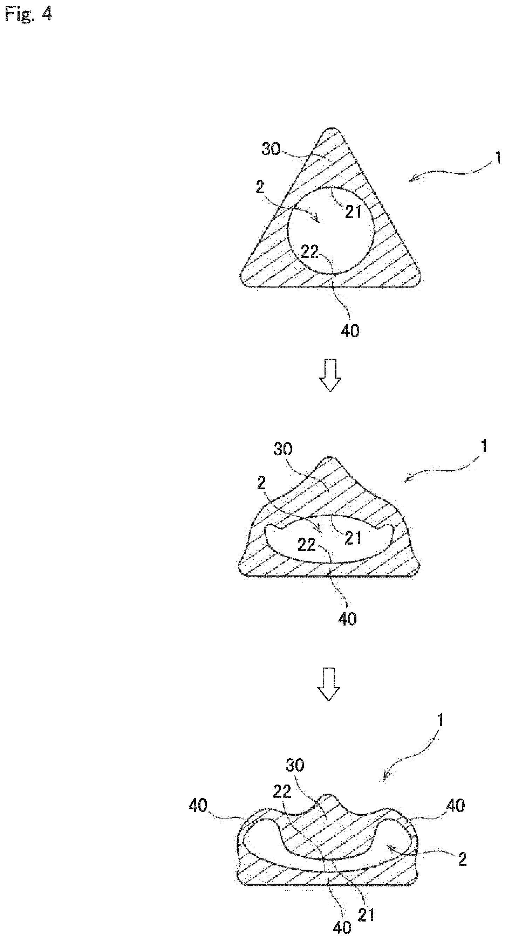

Fig. 3 is a photograph showing a bent location of a tube having the same shape as that of the present embodiment when the tube is bent. Fig. 4 is a sectional view showing cross sections of a bent location when the tube 1 of the present embodiment is bent. As shown in Fig. 4, when the tube 1 is bent, one of the thick-walled portions 30 of the tube 1 and the thin-walled portion 40 opposed to the one thick-walled portion 30 are displaced toward each other. In the tube 1 of the present embodiment, however, the shape of the first arcuate portions 21 is retained because the shape of the thick-walled portions 30 is less prone to change than that of the thin-walled portions 40. For this reason, the flow passage 2 is ensured between one of the first arcuate portions 21 and the second arcuate portion 22 opposed to the one first arcuate portion 21, as shown in the middle part of Fig. 4. In other words, the first arcuate portion 21 and the second arcuate portion 22 opposed to the first arcuate portion 21 are less prone to be close to each other. This restrains the flow passage 2 in the tube 1 from being blocked.

When the tube 1 is bent at a steeper angle, the deformation of the thick-walled portion 30 becomes larger, so that the shape of the first arcuate portion 21 is changed in some cases, as shown in the lower part of Fig. 4. In this case, however, the pair of thin-walled portions 40 positioned on opposite sides of the thick-walled portion 30 bulge outwardly of the tube 1. Thus, the flow passage 2 is ensured inside the pair of thin-walled portions 40. This also restrains the flow passage 2 in the tube 1 from being blocked.

In particular, the thick-walled portions 30 are arranged in circumferentially equally spaced relation in the tube 1 of the present embodiment. This achieves the state shown in the middle or lower part of Fig. 4 regardless of the direction of bending of the tube 1. Therefore, the flow passage 2 in the tube 1 is restrained from being blocked regardless of the direction of bending of the tube 1.

Also, the tube 1 of the present embodiment includes the thin-walled portions 40 each positioned between adjacent ones of the thick-walled portions 30. Thus, the deformation of the tube 1 is concentrated on the thin-walled portions 40 when the tube 1 is locally bent. This further restrains the shape of the first arcuate portions 21 of the thick-walled portions 30 from changing to accordingly further restrain the flow passage 2 in the tube 1 from being blocked.

### <3. Appearance Under Pressure>

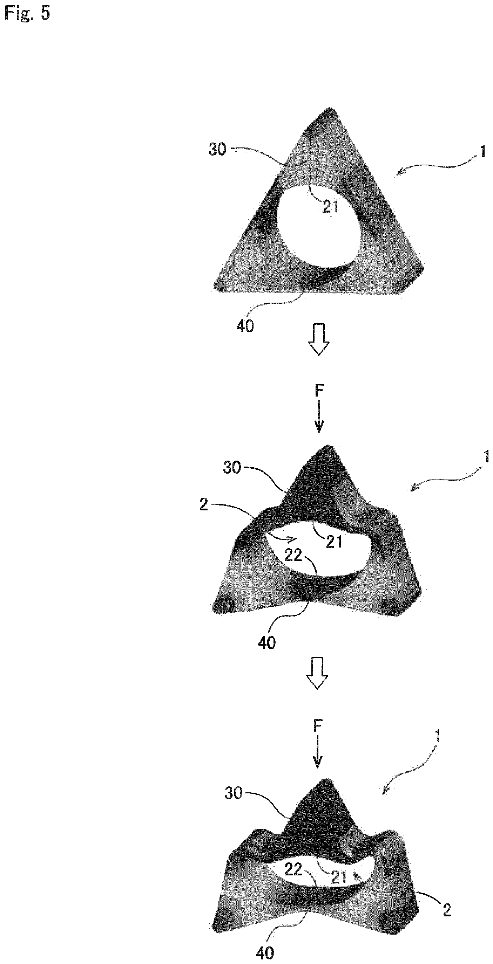

Fig. 5 is a view (simulation result) showing the deformation of the tube 1 when pressure F similar to that of Fig. 11 is externally applied to the tube 1 of the present embodiment.

As shown in Fig. 5, when an external pressure is applied to the tube 1, the shape of the first arcuate portions 21 is also retained because the shape of the thick-walled portions 30 is less prone to change than that of the thin-walled portions 40. For this reason, the flow passage 2 is ensured between one of the first arcuate portions 21 and the second arcuate portion 22 opposed to the one first arcuate portion 21, as shown in the middle and lower parts of Fig. 5. In other words, the first arcuate portion 21 and the second arcuate portion 22 opposed to the first arcuate portion 21 are less prone to be close to each other. This restrains the flow passage 2 in the tube 1 from being blocked.

In particular, the thick-walled portions 30 are arranged in circumferentially equally spaced relation in the tube 1 of the present embodiment. This achieves the state shown in the middle or lower part of Fig. 5 regardless of the direction of the external pressure F. Therefore, the flow passage 2 in the tube 1 is restrained from being blocked regardless of the direction of the external pressure F.

Also, the tube 1 of the present embodiment includes the thin-walled portions 40 each positioned between adjacent ones of the thick-walled portions 30. Thus, the deformation of the tube 1 is concentrated on the thin-walled portions 40 when the tube 1 receives the external pressure F. This further restrains the shape of the first arcuate portions 21 of the thick-walled portions 30 from changing to accordingly further restrain the flow passage 2 in the tube 1 from being blocked.

### <4. About Processing Apparatus>

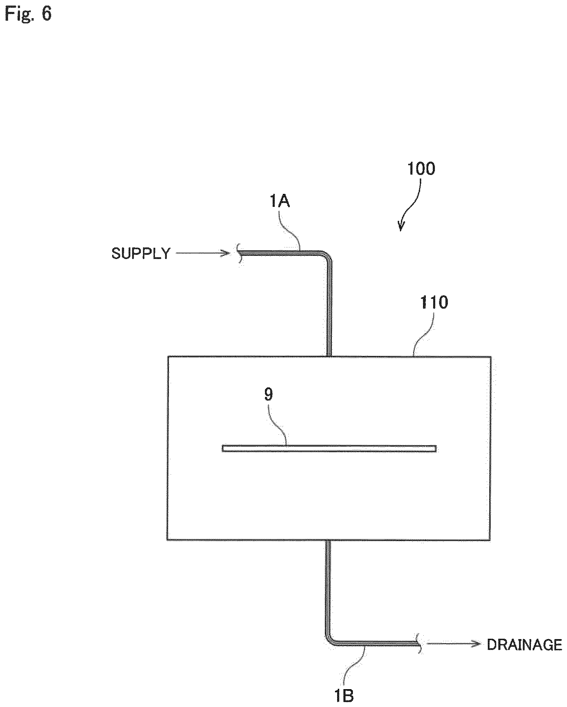

Fig. 6 is a conceptual view of a processing apparatus 100 including the aforementioned tube 1. As shown in Fig. 6, this processing apparatus 100 includes a processing part 110 for performing a process using a fluid on an object 9. The processing apparatus 100 further includes at least one of a supply tube 1A for supplying a fluid to the processing part 110 and a drain tube 1B for draining a fluid from the processing part 110. The aforementioned tube 1 having the outer peripheral surface 10 substantially in the shape of a triangular prism is used for the supply tube 1A and the drain tube 1B.

### <4-1. Instance of Semiconductor Manufacturing Apparatus>

First, description will be given on an instance in which the processing apparatus 100 is a semiconductor manufacturing apparatus. In this case, the object 9 is a semiconductor wafer. The processing part 110 has a nozzle attached to a tip of the supply tube 1A. The processing part 110 ejects a processing liquid that is a fluid supplied thereto through the supply tube 1A from the nozzle toward a surface of the semiconductor wafer. Examples of the processing liquid include various chemical liquids such as a resist solution, a developing solution and a cleaning solution, and deionized water. After use, the processing liquid is drained from the processing part 110 through the drain tube 1B to the outside.

Materials resistant to corrosion by the aforementioned processing liquid and flexible are used as the materials of the supply tube 1A and the drain tube 1B.

In recent years, interconnection patterns formed on semiconductor wafers have become increasingly finer. Accordingly, semiconductor manufacturing apparatuses perform extremely precise control in the process of supplying the processing liquid to the semiconductor wafers. In such a semiconductor manufacturing apparatus, the use of the tube 1 of this shape for the supply tube 1A and the drain tube 1B allows stable supply and drainage of the processing liquid. Thus, the flow rate of the processing liquid is easily precisely controlled in the process of supplying the processing liquid to the semiconductor wafers.

It should be noted that the supply tube 1A and the drain tube 1B may be tubes for passing gases for use in processing the semiconductor wafers (e.g., nitrogen gas for use in a drying process).

### <4-2. Instance of Display Manufacturing Apparatus>

Next, description will be given on an instance in which the processing apparatus 100 is a manufacturing apparatus for displays such as liquid crystal display devices and organic EL display devices. In this case, the object 9 is a substrate for a display. The processing part 110 has a nozzle attached to a tip of the supply tube 1A. The processing part 110 ejects a processing liquid that is a fluid supplied thereto through the supply tube 1A from the nozzle toward a surface of the substrate. Examples of the processing liquid include various chemical liquids such as a resist solution, a developing solution and a cleaning solution, and deionized water. After use, the processing liquid is drained from the processing part 110 through the drain tube 1B to the outside.

Materials resistant to corrosion by the aforementioned processing liquid and flexible are used as the materials of the supply tube 1A and the drain tube 1B.

In recent years, interconnection patterns formed on substrates for displays have become increasingly finer. Accordingly, display manufacturing apparatuses perform extremely precise control in the process of supplying the processing liquid to the substrates. In such a display manufacturing apparatus, the use of the tube 1 of this shape for the supply tube 1A and the drain tube 1B allows stable supply and drainage of the processing liquid. Thus, the flow rate of the processing liquid is easily precisely controlled in the process of supplying the processing liquid to the substrates.

Processing liquids having an extremely high viscosity (e.g., 1000 cP (1 Pa·s) or more) are used in manufacturing apparatuses for flexible displays which have been under development in recent years. In that case, even a small external pressure or slight bending is prone to block the flow of the processing liquid in the tube. However, the use of the tube 1 of this shape for the supply tube 1A and the drain tube 1B of the apparatus restrains the retention of the processing liquid. This allows the ejection of the processing liquid having a high viscosity from the nozzle with stability.

It should be noted that the supply tube 1A and the drain tube 1B may be tubes for passing gases for use in manufacturing the displays (e.g., nitrogen gas for use in a drying process).

### <4-3. Instance of Inkjet Printer >

Next, description will be given on an instance in which the processing apparatus 100 is an inkjet printer for commercial printing. In this case, the object 9 is printing paper. The processing part 110 has a print head attached to a tip of the supply tube 1A. The processing part 110 ejects ink that is a fluid supplied thereto through the supply tube 1A in the form of droplets from the head. This causes an image to be printed on a surface of the printing paper.

Inkjet printers use fine droplets of ink ejected from the head to print high-definition images. For this reason, the stagnation of the supply of ink to the processing part 110 exerts significant influence on the quality of printed images. In particular, the printing speed of inkjet printers has become increasingly faster in recent years. Once the supply of ink stagnates, a large amount of printing paper is transported during the stagnation, which in turn results in a large loss. In such an inkjet printer, the use of the tube 1 of this shape for the supply tube 1A and the drain tube 1B allows the stable supply of ink. This allows the printing process to be performed at high speeds and with stability.

### <4-4. Instances of Other Apparatuses>

The processing apparatus 100 may be an apparatus other than the semiconductor manufacturing apparatus, the display manufacturing apparatus, and the inkjet printer which are described above. For example, the processing apparatus 100 may be a manufacturing apparatus for chemical batteries, a manufacturing apparatus for medical and pharmaceutical products, a manufacturing apparatus for food products, or a medical device used to treat living organisms. The tube 1 of this shape may be used for water supply pipes, water distributing pipes, gas piping, and the like which are incidental facilities of buildings.

### <5. Modifications>

While the main embodiment according to the present invention has been described hereinabove, the present invention is not limited to the aforementioned embodiment.

### < 5-1. First Modification>

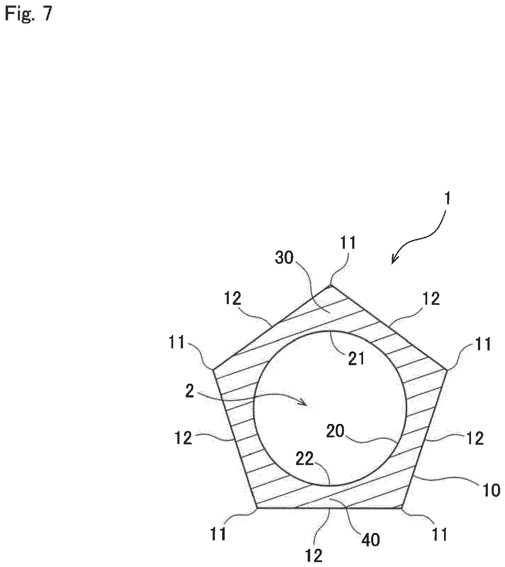

Fig. 7 is a sectional view of the tube 1 according to a first modification taken along a plane perpendicular to the direction of the flow passage thereof. In the example of Fig. 7, the outer peripheral surface 10 in a cross section of the tube 1 is substantially in the shape of an equilateral pentagon. More specifically, the outer peripheral surface 10 of the tube 1 has five corner portions 11 and five side portions 12. The five corner portions 11 protrude outwardly of the tube 1 and extend continuously in the direction of the flow passage. The five corner portions 11 are arranged in circumferentially equally spaced relation around the flow passage 2. Each of the five side portions 12 is positioned between adjacent ones of the corner portions 11. Each of the side portions 12 spreads in a planar shape and extends continuously in the direction of the flow passage.

The inner peripheral surface 20 of the tube 1 is in a cylindrical shape. That is, the inner peripheral surface 20 in a cross section of the tube 1 is circular in shape, as shown in Fig. 7. The radius of curvature of the inner peripheral surface 20 is greater than that of the aforementioned corner portions 11. The inner peripheral surface 20 of the tube 1 includes the first arcuate portions 21 positioned inside the respective corner portions 11 and each having an arcuate shape, and the second arcuate portions 22 positioned inside the respective side portions 12 and each having an arcuate shape.

The tube 1 shown in Fig. 7 has five thick-walled portions 30 and five thin-walled portions 40 thinner than the thick-walled portions 30. Each of the thick-walled portions 30 has one of the corner portions 11 and one of the first arcuate portions 21. Each of the thin-walled portions 40 has one of the side portions 12 and one of the second arcuate portions 22. The five thick-walled portions 30 are arranged in circumferentially equally spaced relation around the flow passage 2. Each of the thin-walled portions 40 is positioned between adjacent ones of the thick-walled portions 30. That is, the thick-walled portions 30 and the thin-walled portions 40 are circumferentially alternately arranged around the flow passage 2.

In the tube 1 shown in Fig. 7, the shape of the thick-walled portions 30 is also less prone to change than that of the thin-walled portions 40. For this reason, the shape of the first arcuate portions 21 is retained when the tube 1 receives an external pressure or when the tube 1 is locally bent. Thus, the flow passage 2 is ensured between each of the first arcuate portions 21 and the second arcuate portion 22 opposed to each first arcuate portion 21, as in the aforementioned embodiment. In other words, each of the first arcuate portions 21 and the second arcuate portion 22 opposed to each first arcuate portion 21 are less prone to be close to each other. This restrains the flow passage 2 in the tube 1 from being blocked.

### <5-2. Second Modification>

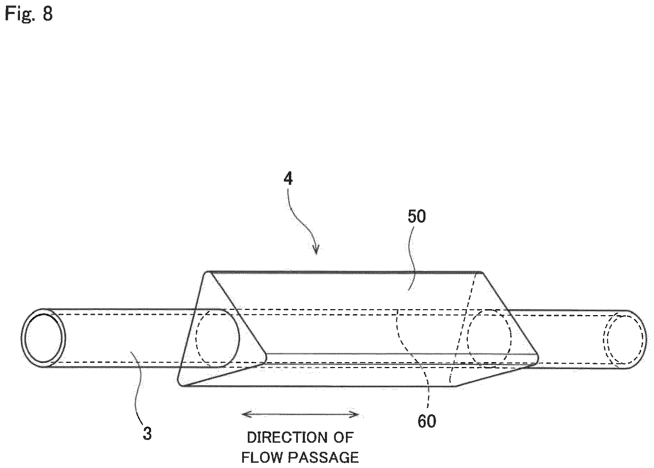

Fig. 8 is a perspective view of a tube unit according to a second modification. In the example of Fig. 8, an auxiliary tube 4 of the same shape as the tube 1 of the aforementioned embodiment is mounted on an outer peripheral surface of a main tube 3 for passing fluid therethrough. The main tube 3 is a typical tube having the outer peripheral surface and an inner peripheral surface both of which are cylindrical in shape. The auxiliary tube 4 has an outer peripheral surface 50 substantially in the shape of a triangular prism and an inner peripheral surface 60 in a cylindrical shape.

In the example of Fig. 8, the inner peripheral surface 60 of the auxiliary tube 4 is in close contact with the outer peripheral surface of the main tube 3. Thus, the main tube 3 and the auxiliary tube 4 integrally deform in an area where the auxiliary tube 4 is mounted. This restrains the flow passage 2 from being blocked inside of the main tube 3 in that area even when the tube unit receives the external pressure F, as in the aforementioned embodiment.

In particular, in the example of Fig. 8, the auxiliary tube 4 is used only where necessary while an easy-to-manufacture tube having a cylindrical outer peripheral surface is used for the main tube 3. This reduces the manufacturing costs of the tube unit on the whole. Also, the auxiliary tube 4 is slidably movable along the outer peripheral surface of the main tube 3. Thus, the reinforcement position using the auxiliary tube 4 is changeable according to the circumstances. If there is no need to change the position of the auxiliary tube 4, the outer peripheral surface of the main tube 3 and the inner peripheral surface 60 of the auxiliary tube 4 may be fixed together with an adhesive for the purpose of improving the unity of the main tube 3 and the auxiliary tube 4.

### <5-3. Other Modifications>

The number of thick-walled portions 30 of the tube 1 is three or five in the aforementioned embodiment and modifications. However, the number of thick-walled portions 30 of the tube 1 may be one, two, four, or not less than six. When the number of thick-walled portions 30 is odd, the thick-walled portions 30 and the thin-walled portions 40 face each other across the internal flow passage 2. In other words, the first arcuate portions 21 and the second arcuate portions 22 face each other across the internal flow passage 2. This makes it easy to ensure the flow passage 2 between the first arcuate portions 21 and the second arcuate portions 22. Thus, the flow passage 2 in the tube 1 is further restrained from being blocked.

In the aforementioned embodiment and modifications, the inner peripheral surface 20 in the cross section of the tube 1 is circular in shape. Accordingly, the first arcuate portions 21 and the second arcuate portions 22 are arcuate in shape. However, the shape of the first arcuate portions 21 and the second arcuate portions 22 may be other than the arcuate shape. For example, the shape of the first arcuate portions 21 and the second arcuate portions 22 in a cross section of the tube 1 may be part of an ellipse or a catenary curve that is resistant to external pressure. Alternatively, the first arcuate portions 21 and the second arcuate portions 22 may have fine irregularities. The radii of curvature of the macroscopic outlines of the first arcuate portions 21 and the second arcuate portions 22 are required only to be greater than the radius of curvature of the corner portions 11.

The configuration of the details of the tube may differ from that shown in the figures of the present invention. The components described in the aforementioned embodiment and in the modifications may be combined together, as appropriate, without inconsistencies.

### Reference Signs List

- 1: Tube
- 1A: Supply tube
- 1B: Drain tube
- 2: Flow passage
- 3: Main tube
- 4: Auxiliary tube
- 9: Object
- 10: Outer peripheral surface
- 11: Corner portions
- 12: Side portions
- 20: Inner peripheral surface
- 21: First arcuate portions
- 22: Second arcuate portions
- 30: Thick-walled portions
- 40: Thin-walled portions
- 50: Outer peripheral surface
- 60: Inner peripheral surface
- 100: Processing apparatus
- 110: processing part
- F: Pressure

## Claims

1. A flexible tube comprising:
a tubular outer peripheral surface; and
a tubular inner peripheral surface,
said outer peripheral surface including at least one corner portion protruding outwardly,
said inner peripheral surface including a first arcuate portion positioned inside said corner portion and having a radius of curvature greater than that of said corner portion.

2. The tube according to Claim 1, further comprising
a plurality of thick-walled portions arranged in a circumferential direction,
each of said thick-walled portions including said corner portion and said first arcuate portion.

3. The tube according to Claim 2, further comprising
a thin-walled portion having a thickness less than that of said thick-walled portions and provided between adjacent ones of said thick-walled portions.

4. The tube according to Claim 3,
wherein said thick-walled portions are odd in number.

5. The tube according to Claim 4,
wherein said at least one corner portion includes three corner portions,
wherein said outer peripheral surface includes said three corner portions and planar side portions each positioned between adjacent ones of said corner portions, and
wherein said inner peripheral surface is in a cylindrical shape including said first arcuate portion.

6. The tube according to any one of Claims 1 to 5,
wherein said inner peripheral surface forms a flow passage.

7. The tube according to any one of Claims 1 to 5,
said tube being mounted on an outer peripheral surface of another tube.

8. A processing apparatus comprising:
a processing part for performing a process using a fluid on an object, and
a tube as recited in any one of Claims 1 to 7,
wherein said tube is used to perform at least one of the supply of said fluid to said processing part and the drainage of said fluid from said processing part.
